# EUROPEAN PATENT APPLICATION

(11) **EP 4 167 453 A1**
(43) Date of publication of application: **19.04.2023**
(21) Application number: 22201663.6
(22) Date of filing: 14.10.2022
(51) Int. Cl.: H02M 1/00, H02M 3/07, H02M 3/335, H02M 3/00, H02M 1/42

(54) **POWER CONVERTER**

(30) Priority: 15.10.2021 CN 202111202025
(71) Applicant: Silergy Semiconductor Technology (Hangzhou) Ltd, Zhejiang 310051 (CN)
(72) Inventor: WANG, Longqi, Hangzhou City, Zhejiang Province, 310051 (CN); WANG, Jianxin, Hangzhou City, Zhejiang Province, 310051 (CN)
(74) Representative: Viering, Jentschura & Partner mbB Patent- und Rechtsanwälte

(57) **Abstract**

A power converter is provided. Positions of a charge pump module and an EMI filter circuit in the power converter can be varied to achieve the common reference voltage of a sampling resistor and a low-side power transistor, thereby simplifying the design of a control circuit.

## Description

### BACKGROUND

### 1. Field of the Disclosure

The present disclosure relates to power electronics and, more particularly, to a power converter.

### 2. Description of Related Art

Nowadays, users hold increasingly high expectations of LED drivers, for example, in terms of low harmonic waves, high power factor (PF) value, flicker-free, compact, high efficiency, and low cost. Because general LED power drivers adopt conventional bridge rectifiers and capacitor filter circuits thereof such that there is severe waveform distortion of an AC input current and a huge amount of high-order harmonic components are introduced into a power grid, the PF on the power grid side is low, the huge amount of high-order harmonic components cause severe harmonic pollution and interference to the power grid as well as the other electrical apparatuses, and the other electrical apparatuses are unable to work. In view of this, a conventional LED driver typically comes with a power factor correction (PFC) circuit to increase the power factor in the LED power driver, thereby reducing harmonic interference.

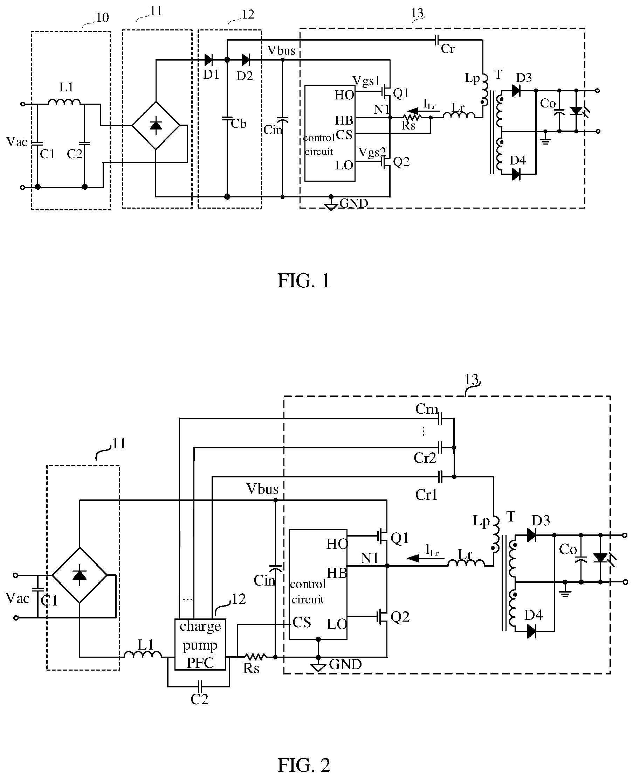

Referring to FIG. 1, FIG. 1 shows a circuit diagram of a conventional power converter according to prior art. The power converter is configured to drive an LED and comprises an EMI filter circuit 10, an input rectification module 11, a charge pump module 12, an input filter capacitor Cin and a resonant converter 13. A resonant capacitor Cr, a primary winding Lp and a resonant inductor Lr are series-connected between the charge pump module 12 and a middle node N1 of power transistors Q1, Q2 to form a resonant network. The EMI filter circuit 10 comprises capacitors C1, C2 and an inductor L1 for suppressing differential-mode interference, wherein the capacitor C1 is connected between two terminals of an AC input voltage Vac, the inductor L1 is connected between first terminals of the capacitors C1, C2 and the capacitor C2 is connected between two input terminals of the input rectification module 11. The input rectification module 11is configured to rectify the AC input voltage Vac into a DC voltage and is exemplified by a rectification bridge in this embodiment. The resonant converter 13 further comprises a control circuit for obtaining a current sampling signal CS (the current sampling signal CS being equal to ILr×Rs) according toa sampling resistor Rs series-connected in the resonant network, thereby generating driving control signals Vgs1, Vgs2 for driving the power transistors Q1, Q2, respectively. However, a reference ground for the sampling resistor Rs is positioned on the middle node N1 of the power transistors Q1, Q2 rather than a reference ground GND for the power transistor Q2 (i.e., a reference ground for the input filter capacitor), thereby rendering the design of the control circuit complicated.

### SUMMARY

In view of the aforementioned drawback of the prior art, the objective of the disclosure is to provide a power converter advantageous in that, by varying positions of a charge pump module and an EMI filter circuit in the power converter, the common grounding of a sampling resistor and an input DC voltage may be achieved , and thus the design of a control circuit may be simplified.

In the first aspect, the disclosure provides a power converter comprising:
an input rectification module for rectifying an AC input voltage to output a DC input voltage;
a resonant converter comprising at least first power transistor and second power transistor coupled in series between the DC input voltage and a reference voltage and performing power conversion on the DC input voltage to supply power to a load;
a charge pump module comprising a first terminal coupled to a negative output terminal of the input rectification module, a second terminal coupled to the reference voltage and at least one third terminal being coupled to a resonant network of the resonant converter; and,
a first capacitor parallel-connected between the first terminal and the second terminal of the charge pump module.

Specifically, the power converter further comprises:
a first inductor series-connected with an input terminal or an output terminal of the input rectification module; and
a second capacitor connected between two terminals of the AC input voltage, wherein the first inductor, the second capacitor and the first capacitor jointly form an EMI filter circuit.

Specifically, the charge pump module comprises at least one diode group each of which comprises two diodes series-connected between the first terminal and the second terminal of the charge pump module to form a unidirectional conducting path from the second terminal to the first terminal.

Specifically, when the charge pump module comprises a plurality of diode groups, the diode groups are parallel-connected.

Specifically, a common point of the two diodes of each of the at least one diode group serves as a third terminal of the charge pump module, and each third terminalis respectively connected to a corresponding one of resonant capacitors in the resonant converter.

Specifically, the number of the resonant capacitors in the resonant converter corresponds to the number of the diode groups.

Specifically, the charge pump module further comprises at least one boost capacitor parallel-connected to a diode in the at least one diode group, respectively.

Specifically, when the charge pump module comprises a plurality of boost capacitors, each of the boost capacitors is parallel-connected to a corresponding one of the diodes in different diode groups, respectively.

Specifically, the resonant converter comprises at least one resonant capacitor, wherein a first terminals of the at least one resonant capacitor are connected to the charge pump module and second terminals of the at least one resonant capacitor are connected with each other and are series-connected to the resonant inductor and a primary winding of a transformer in the resonant converter, thereby forming a resonant network of the resonant converter.

Specifically, the power converter further comprises a sampling circuit connected between the second terminal of the charge pump module and the reference voltage to obtain a current sampling signal corresponding to the reference voltage, so as for the control of the resonant converter.

Specifically, the sampling circuit comprises a sampling resistor, and the current sampling signal is obtained at a terminal of the sampling resistor corresponding to the reference voltage.

Specifically, the power converter further comprises a control circuit for receiving the current sampling signal and generating a switch control signal according to the current sampling signal to control a switch action of the power transistors in the resonant converter.

Specifically, the control circuit comprises a master circuit and a sub-control circuit. The master circuit is configured to generate a driving signal for controlling the second power transistor corresponding to the reference voltage. The sub-control circuit is configured to generate a driving signal for controlling the first power transistor corresponding to a voltage at a middle node of the first and second power transistors.

In conclusion, embodiments of the disclosure provide a power converter advantageous in that, by varying positions of a charge pump module and an EMI filter circuit in the power converter, a common reference voltage of a sampling resistor and an input DC voltage may be achieved, and thus the design of a control circuit may be simplified.

### BRIEF DESCRIPTION OF THE DRAWINGS

For a more complete understanding of the aforementioned and other objectives, features and advantages of the disclosure, reference is now made to the following description of embodiments of the disclosure, taken in conjunction with the accompanying drawings, in which:
FIG. 1 (PRIOR ART) is a circuit diagram of a conventional power converter according to prior art;
FIG. 2 is a schematic view of a first circuit of a power converter according to an embodiment of the disclosure;
FIG. 3 is a schematic view of a second circuit of the power converter according to an embodiment of the disclosure;
FIG. 4 is a schematic view of a third circuit of the power converter according to an embodiment of the disclosure;
FIG. 5 is a circuit diagram of a first power converter according to an embodiment of the disclosure;
FIG. 6 is an operating waveform diagram of the first power converter according to an embodiment of the disclosure;
FIG. 7 is an equivalent circuit diagram of the first power converter according to an embodiment of the disclosure; and
FIG. 8 is a circuit diagram of a second power converter according to an embodiment of the disclosure.

### DETAILED DESCRIPTION

The disclosure is hereunder described in accordance with embodiments, but the disclosure is not restricted to the embodiments. A detailed description of the disclosure is presented below to fully describe specific details. Persons skilled in the art are able to fully understand the disclosure even without the description of the details. Well-known methods, processes, process flows, components and circuits are not described in detail in order not to confuse them with essential technical features of the disclosure.

Persons skilled in the art understand that accompanying drawings are merely illustrative and are not necessarily drawn to scale.

The term "circuit" refers to a conducting loop formed by at least one component or sub-circuit electrically connected or electromagnetically connected. When a component is "connected to" another component or "connected between" two nodes, it is directly coupled or connected to another component, or an intervening component exists, with the components being connected physically or logically or bonded together. By contrast, when a component is "directly coupled to" or "directly connected to" another component, there is no intervening component between the two components.

Unless otherwise specified in the context, the terms "comprise," "include" and the like used herein shall be construed to mean "comprise" (i.e., "including but not limited to") rather than "exclusive" or "exhaustive."

The terms "first," "second" and the like used herein merely serve differentiation purposes but shall not be interpreted to mean to expound or imply relative importance. Unless otherwise specified, the term "multiple" used herein means "two or more."

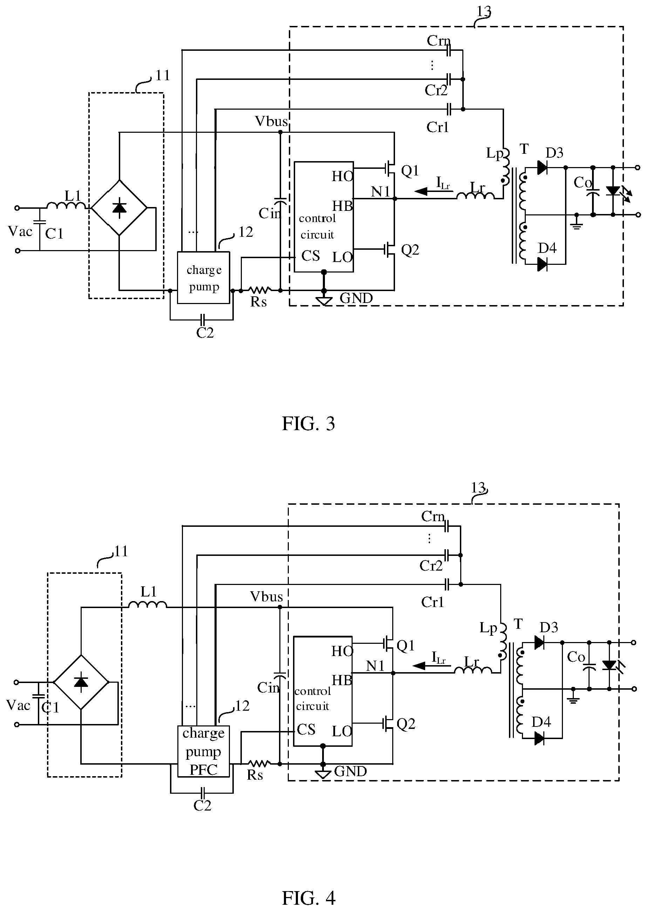

FIG. 2 is a schematic view of a first circuit of a power converter according to an embodiment of the disclosure. As shown in FIG. 2, the power converter comprises an input rectification module 11, a charge pump module 12, an input filter capacitor Cin and a resonant converter 13. The input rectification module 11 is configured to rectify an AC input voltage Vac to output a DC input voltage Vbus. The resonant converter 13 includes at least one half-bridge, and the half-bridge includes at least first Q1 and second Q2 power transistors connected between DC input voltage Vbus and a reference voltage. The first power transistor also serves as a high-side power transistor, and the second power transistor also serves as a low-side power transistor. Preferably the reference voltage is configured as a reference ground GND. In this embodiment, the input rectification module 11 is a rectification bridge and it can be understood that the input rectification module 11 can be implemented by any circuit capable of rectification. In this embodiment, the power converter further comprises an EMI filter circuit. The EMI filter circuit comprises a second capacitor C1, an inductor L1 and a first capacitor C2. The second capacitor C1is connected between two terminals of the AC input voltage Vac. The inductor L1 is series-connected in a rectification loop of the input rectification module 11 and is connected to an output terminal of the input rectification module 11. Alternatively, the inductor L1 is connected to an input terminal of the input rectification module 11. For example, in an embodiment, the inductor L1 is connected between a negative output terminal of the input rectification module 11 and a first terminal of the charge pump module 12. In another embodiment, as shown in FIG. 3, the inductor L1 is connected between a first terminal of the capacitor C1 and a positive input terminal of the input rectification module 11. Alternatively, as shown in FIG. 4, the inductor L1 is connected between a positive output terminal of the input rectification module 11 and a first terminal of the input filter capacitor Cin. The input filter capacitor Cin is connected between the positive output terminal of the input rectification module 11 and the reference ground GND to convert the DC input voltage Vbus into a smoothened DC input voltage Vbus.

The charge pump module 12 achieves power factor correction with a resonant current resulting from a resonant loop and a current extracted from the rectified voltage and achieves voltage boost by supplying a current to the input filter capacitor Cin. In this embodiment, the charge pump module 12 comprises a first terminal, a second terminal and at least one third terminal. The first terminal of the charge pump module 12is coupled to the negative output terminal of the input rectification module 11, and the second terminal is coupled to the reference ground GND. The at least one third terminal of the charge pump module 12 is coupled to the resonant network of the resonant converter 13. The first terminal of the charge pump module 12 is coupled to the negative output terminal of the input rectification module 11 through an inductor L1. The second terminal of the charge pump module 12 is coupled to the second terminal (i.e., the reference ground GND) of the input filter capacitor Cin through a sampling circuit. Each of the at least one third terminal of the charge pump module 12 is further connected to a corresponding one of resonant capacitors of the resonant converter 13. The capacitor C2 is parallel-connected between the first terminal and the second terminal of the charge pump module 12. The capacitor C1, capacitor C2 and inductor L1 jointly form an EMI filter circuit having the same function as the EMI filter circuit in FIG. 1.

In this embodiment, the sampling circuit in the power converter comprises a sampling resistor Rs connected between the second terminal of the charge pump module 12 and the reference ground GND to obtain the current sampling signal CS at the terminal (e.g., the second terminal) of the sampling resistor Rs corresponding to the reference voltage, so as for the control of the resonant converter.

According to the disclosure, the charge pump module 12 comprises at least one diode group for forming a unidirectional conducting path from the reference ground GND to the negative output terminal of the input rectification module 11. Each diode group comprises two diodes series-connected between the first terminal and the second terminal of the charge pump module 12. The two diodes have a common point which is the third terminal of the charge pump module 12. The two diodes are connected to the resonant network of the resonant converter 13 and connected to the first terminal of the corresponding one of resonant capacitors in the resonant network. When the charge pump module 12 comprises a plurality of diode groups, the diode groups are connected in parallel. The charge pump module 12 further comprises at least one boost capacitor parallel-connected to diodes, respectively, and one terminal of each boost capacitor is connected to one terminal of a corresponding one of the at least one resonant capacitor. Thus, when the charge pump module 12comprisesaplurality of boost capacitors, each of the boost capacitors is parallel-connected to one diode in different diode groups, respectively.

The resonant converter 13 receives the DC input voltage Vbus and performs thereon power conversion to convert the DC input voltage Vbus into an output voltage or output current for supplying power to a load, and herein the load is an LED. In this embodiment, the resonant converter 13 is a half-bridge LLC resonant converter. The primary side of the resonant converter 13 comprises power transistors Q1, Q2 series-connected between the DC input voltage Vbus and the reference ground GND, and a resonant unit. The resonant unit comprises at least one resonant capacitor (Cr1, Cr2... Crn, where n≥1), a resonant inductor Lr, and a primary winding Lp of a first transformer T1. It should be understood that the number of the at least one resonant capacitor corresponds to the number of the diode groups in the charge pump module.

The second terminals of the at least one resonant capacitor are connected and then series-connected to the resonant inductor Lr and the primary winding Lp of the first transformer T1. In the embodiment illustrated by FIG. 2, the first terminal of each resonant capacitor is connected to the charge pump module 12, whereas the second terminal of each resonant capacitor is connected to one terminal (i.e., non- corresponding end) of the primary winding Lp, and the resonant inductor Lr is connected between the middle node N1 and the other terminal (i.e., corresponding end) of the primary winding Lp. Alternatively, the resonant inductor Lr maybe connected between the resonant capacitor Cr and the primary winding Lp, provided that the resonant inductor Lr, the resonant capacitor Cr and the primary winding Lp are series-connected in the resonant loop. The secondary side of the resonant converter 13 comprises a rectification circuit and herein the rectification circuit is a full-wave rectification circuit comprising secondary windings and diodes D1, D2. An output capacitor Co is connected output terminals of the rectification circuit, and is parallel-connected to the load, i.e., the LED.

In addition, the power converter further comprises a control circuit. The control circuit comprises a master circuit for generating a switch control signal according to the current sampling signal CS and an output voltage feedback signal and outputting a driving signal via a port LO to control the switch state of the power transistor Q2. The reference ground for the master circuit is configured as the reference ground GND. The control circuit further comprises a sub-control circuit for outputting a driving signal via a port HB according to the switch control signal generated by the master circuit, so as to control the switch state of the power transistor Q1. The reference ground for the sub-control circuit is configured as the middle node N1.

Compared with the embodiment illustrated by FIG. 1, in the embodiment illustrated by FIG. 2,the sampling resistor Rs is not directly connected in series with the primary winding Lp, but the sampling resistor Rs is series-connected between the second terminal of the charge pump module 12and the second terminal of the input filter capacitor Cin to perform current sampling, such that one terminal of the sampling resistor Rs is directly connected to the reference ground GND, and in consequence the current sampling signal CS indicative of the resonant current I_{Lr} relative to the reference ground GND is obtained at the other terminal of the sampling resistor Rs.

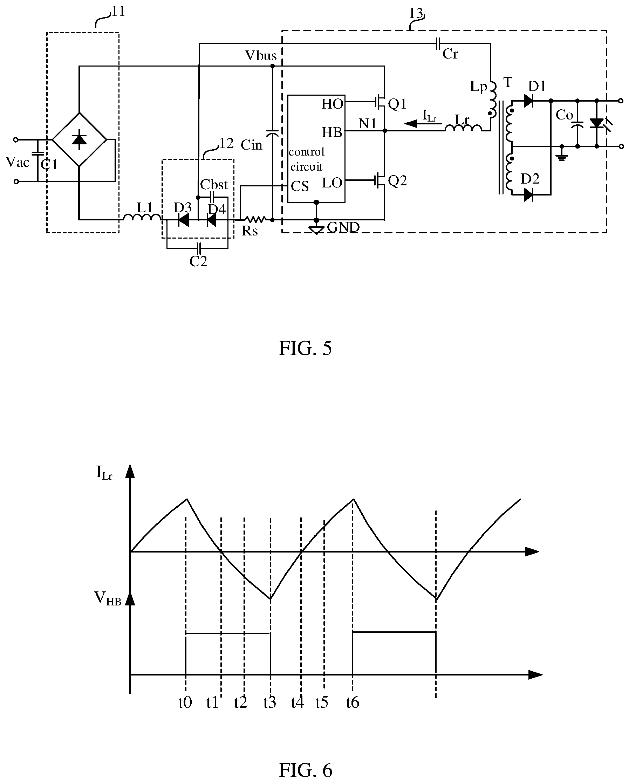

FIG. 5 is a circuit diagram of a first power converter according to an embodiment of the disclosure. In this embodiment, the charge pump module 12 comprises only one diode group. The charge pump module 12 comprises diodes D3, D4 which together form one diode group and are series-connected between the first terminal (the non-grounded terminal) of the sampling resistor Rs and the negative output terminal of the input rectification module 11. The diodes D3, D4 have the same conduction direction, forming a unidirectional conducting path from the reference ground GND to the negative output terminal of the input rectification module 11. The cathode of the diode D3 is connected to the second terminal of the inductor L 1. The first terminal of the inductor L1 is connected to the negative output terminal of the input rectification module 11. The cathode of the diode D4 is connected to the anode terminal of the diode D3. The anode of the diode D4 is connected to the first terminal of the sampling resistor Rs. The boost capacitor Cbst is parallel-connected to the diode D3 or D4. In this embodiment, the boost capacitor Cbst is parallel-connected to the diode D4. In another embodiment, the boost capacitor Cbst is parallel-connected to the diode D3. The common point of the diodes D3 andD4 is connected to the first terminal of the resonant capacitor Cr in the resonant converter 13. The other modules shown in FIG. 5 are identical to their counterparts in FIG. 2 and thus are not reiterated herein.

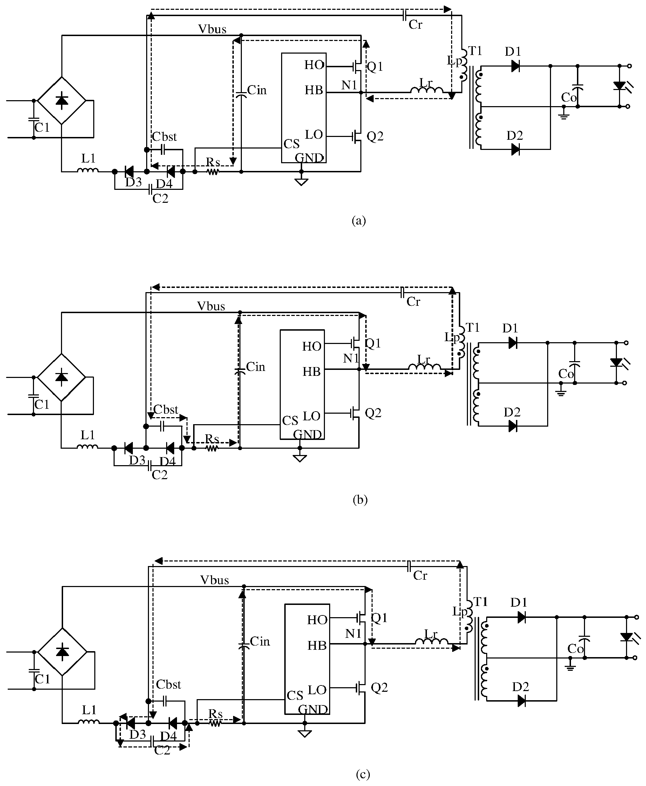

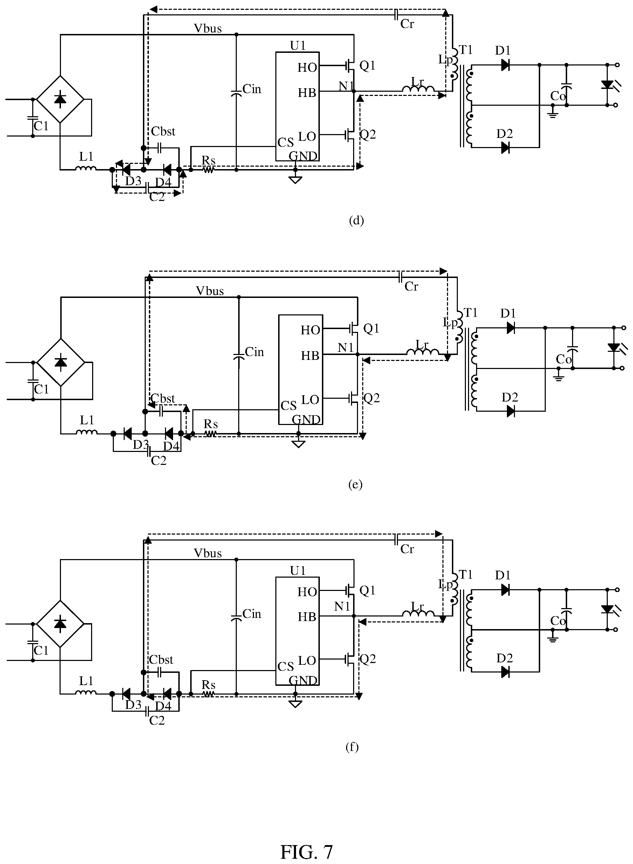

FIG. 6 is an operating waveform diagram of the first power converter according to an embodiment of the disclosure. Referring to FIG. 6, FIG. 6 shows a waveform diagram of resonant current I_{Lr} and voltage V_{HB} at the middle node N1. FIG. 7 is an equivalent circuit diagram of the first power converter according to an embodiment of the disclosure. The operating principle of the power converter shown in FIG. 5is described below with reference to FIG. 6 and FIG. 7.

During time period t0-t1, the resonant current I_{Lr} decreases from a peak value gradually, the power transistor Q1 is turned on, and voltage V_{HB} is equal to Vbus. The equivalent circuit diagram of the power converter during the time period is shown in FIG. 7 (a) to demonstrate technical features as follows: the resonant current I_{Lr} charges the input filter capacitor Cin through the power transistor Q1, flows through the sampling resistor Rs and the diode D4, and then flows into the resonant unit of the resonant converter, or, in other words, flows through the resonant capacitor Cr, primary winding Lp and resonant inductor Lr to form a closed loop.

During time period t1-t2, the resonant current I_{Lr} decreases to zero and begins to reverse, and the power transistor Q1 is still turned on. The equivalent circuit diagram of the power converter during the time period is shown in FIG. 7 (b) to demonstrate technical features as follows: the resonant current I_{Lr} flows through the boost capacitor Cbst, the sampling resistor Rs, the input filter capacitor Cin, and the power transistor Q1 and then returns to the resonant unit to form a closed loop. During this time period, the input filter capacitor Cin is discharged, and the boost capacitor Cbst is charged, until time t2 at which the voltage across the two terminals of the boost capacitor Cbst reaches the voltage across the two terminals of the capacitor C2, allowing the diode D3 to be turned on thereafter.

The equivalent circuit diagram of the power converter during the time period t2-t3is shown in FIG. 7 (c) to demonstrate technical features as follows: the resonant current I_{Lr} flows through the resonant unit, the diode D3, the capacitor C3, the sampling resistor Rs, the input filter capacitor Cin, and the power transistor Q1 to form a closed loop thereafter. During this time period, the input filter capacitor Cin is discharged, and the capacitor C2 is charged. Until time t3, the power transistor Q1 is turned off, the power transistor Q2 is turned on, and the resonant current I_{Lr} begins to decrease.

The equivalent circuit diagram of the power converter during the time periodt3-t4is shown in FIG. 7 (d) to demonstrate technical features as follows: the resonant current I_{Lr} begins to decrease from time t3 and flows through the resonant unit, the diode D3, the capacitor C2, the sampling resistor Rs, and the power transistor Q2 to form a closed loop thereafter. Until time t4, the resonant current I_{Lr} decreases in the negative direction to zero, and the resonant current I_{Lr} is positive thereafter.

During time period t4-t5, the power transistor Q2 is still turned on, and the equivalent circuit diagram of the power converter is shown in FIG. 7 (e) to demonstrate technical features as follows: the resonant current I_{Lr} flows through the power transistor Q2, the sampling resistor Rs, the boost capacitor Cbst, and the resonant unit to form a closed loop. During this time period, the boost capacitor Cbst is discharged. Until time t5, the boost capacitor Cbst is discharged to reach zero, and the diode D4 is turned on thereafter.

During time period t5-t6, the power transistor Q2 is still turned on, and the equivalent circuit diagram of the power converter is shown in FIG. 7 (f) to demonstrate technical features as follows: the resonant current I_{Lr} flows through the power transistor Q2, the sampling resistor Rs, the diode D4, and the resonant unit to form a closed loop. At this point in time, one resonant cycle terminates and starts again, recurringly.

Thus, during one resonant cycle, the resonant current I_{Lr} always flows through the sampling resistor Rs, whereas the voltage across the two terminals of the sampling resistor Rs is equal to Rs×I_{Lr}, directly proportional to the resonant current I_{Lr}, and thus quantitatively indicative of the resonant current I_{Lr}.

In conclusion, by varying the positions of some of the filtering elements in the EMI filter circuit and the connecting way of the charge pump module, the reference ground of the current sampling signal CS is reference ground GND, such that the reference ground of a master circuit in the control circuit is configured as reference ground GND, thereby simplifying the design of the control circuit.

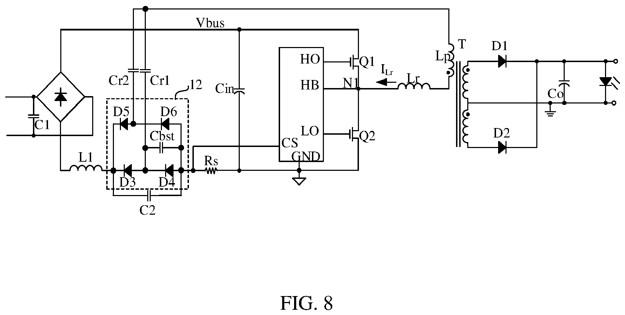

FIG. 8 is a circuit diagram of a second power converter according to an embodiment of the disclosure. In this embodiment, the charge pump module comprises two diode groups. Compared with the embodiment illustrated by FIG. 5, the embodiment illustrated by FIG. 8 has the following distinguishing technical features: (1) the resonant converter comprises two resonant capacitors Cr1, Cr2; (2) the charge pump module 12 in FIG. 8 has one more diode group (diodes D5, D6) than the charge pump module in FIG. 5. In this embodiment, the first terminal of the resonant capacitor Cr2is connected to the common point of the diodes D5, D6 and the second terminal of the resonant capacitor Cr2 is connected to a second terminal of the resonant capacitor Cr1. Likewise, the current sampling signal CS indicative of the resonant current I_{Lr} corresponding to reference ground GND is generated at the first terminal of the sampling resistor Rs; and the related operating process is not reiterated herein, as persons skilled in the art are able to infer it easily. Furthermore, persons skilled in the art can alter the shape of the diode groups by inference.

In conclusion, embodiments of the disclosure provide a power converter advantageous in that, by varying positions of a charge pump module and an EMI filter circuit in the power converter, a common reference voltage of a sampling resistor and a low-side power transistor in the power converter may be achieved, and thus the design of a control circuit may be simplified.

The above preferred embodiments are illustrative of the disclosure rather than restrictive of the scope of the disclosure. Persons skilled in the art can make various modifications and changes to the embodiments. All amendments, equivalent replacements, and improvements made by persons skilled in the art in the embodiments without departing from the spirit and principles of the disclosure shall be deemed falling within the scope of the claims of the disclosure.

## Claims

1. A power converter, comprising:
an input rectification module (11) for rectifying an AC input voltage to output a DC input voltage;
a resonant converter (13) comprising at least first power transistor and second power transistor coupled in series between the DC input voltage and a reference voltage and performing power conversion on the DC input voltage to supply power to a load;
a charge pump module (12) comprising a first terminal coupled to a negative output terminal of the input rectification module (11), a second terminal coupled to the reference voltage, and the at least one third terminal being coupled to a resonant network of the resonant converter (13); and
a first capacitor parallel-connected between the first terminal and the second terminal of the charge pump module (12).

2. The power converter of claim 1, further comprising:
a first inductor series-connected with an input terminal or an output terminal of the input rectification module (11); and
a second capacitor connected between two terminals of the AC input voltage, wherein the first inductor, the second capacitor and the first capacitor jointly form an EMI filter circuit (10).

3. The power converter of claim 1 or 2, **characterized in that** the charge pump module (12) comprises at least one diode group, each of which comprises two diodes series-connected between the first terminal and the second terminal of the charge pump module (12) to form a unidirectional conducting path from the second terminal to the first terminal.

4. The power converter of claim 3, **characterized in that**, when the charge pump module (12) comprises a plurality of diode groups, the diode groups are parallel-connected.

5. The power converter of claim 3, **characterized in that** a common point of the two diodes of each of the at least one diode group serves as a third terminal of the charge pump module (12), and each third terminal is respectively connected to a corresponding one of resonant capacitors in the resonant converter (13).

6. The power converter of any one of claims 3 to 5, **characterized in that** the number of resonant capacitors in the resonant converter (13) corresponds to the number of the diode groups.

7. The power converter of any one of claims 3 to 6, **characterized in that** the charge pump module (12) further comprises at least one boost capacitor parallel-connected to a diode in the at least one diode group, respectively.

8. The power converter of claim 7, **characterized in that**, when the charge pump module (12) comprises a plurality of boost capacitors, each of the boost capacitors is parallel-connected to a corresponding one of the diodes in different diode groups, respectively.

9. The power converter of any one of claims 1 to 8, **characterized in that** the resonant converter (13) comprises at least one resonant capacitor, wherein first terminals of the at least one resonant capacitor are connected to the charge pump module (12) and second terminals of the at least one resonant capacitor are connected with each other and are series-connected to the resonant inductor and a primary winding of a transformer in the resonant converter (13), thereby forming a resonant network of the resonant converter (13).

10. The power converter of any one of claims 1 to 9, further comprising a sampling circuit connected between the second terminal of the charge pump module (12) and the reference voltage to obtain a current sampling signal corresponding to the reference voltage, so as for the control of the resonant converter (13).

11. The power converter of claim 10, **characterized in that** the sampling circuit comprises a sampling resistor, and the current sampling signal is obtained at a terminal of the sampling resistor corresponding to the reference voltage.

12. The power converter of claim 10 or 11, further comprising a control circuit for receiving the current sampling signal and generating a switch control signal according to the current sampling signal to control a switch action of the power transistor in the resonant converter (13).

13. The power converter of claim 12, **characterized in that** the control circuit comprises:
a master circuit configured to generate a driving signal for controlling the second power transistor corresponding to the reference voltage; and a sub-control circuit configured to generate a driving signal for controlling the first power transistor corresponding to a voltage at a middle node of the first and second power transistors.
